# EUROPEAN PATENT SPECIFICATION

(11) **EP 1 196 519 B1**
(45) Date of publication and mention of the grant of the patent: **24.11.2004**
(21) Application number: 00953037.9
(22) Date of filing: 12.07.2000
(51) Int. Cl.: C11B 9/02

(54) **PROCESS FOR SEPARATING ESSENTIAL OILS FROM AN ESSENTIAL OIL-CONTAINING MATERIAL**
VERFAHREN ZUR TRENNUNG VON ÄTHERISCHEN ÖLEN AUS ÄTHERISCHEN ÖLEN ENTHALENDEM MATERIAL
PROCESSUS DE SEPARATION D'HUILES ESSENTIELLES A PARTIR DE SUBSTANCES LES CONTENANT

(30) Priority: 13.07.1999 GB 9916418
(43) Date of publication of application: 17.04.2002
(73) Proprietor: DANISCO A/S, 1001 Copenhagen K. (DK)
(72) Inventor: JUMPPANEN, Juho, FIN-02780 Espoo (FI); ENNELIN, Anu, FIN-02750 Espoo (FI)
(74) Representative: HOFFMANN - EITLE
(86) International application number: PCT/EP2000/006644
(87) International publication number: WO 2001/004245

(56) References cited:
- FR-A- 673 341
- FR-A- 2 717 492
- CHEMICAL ABSTRACTS, vol. 95, no. 18, 2 November 1981 (1981-11-02) Columbus, Ohio, US; abstract no. 156349, MASTELIC ET AL: "Separation of essentials oils from a steam distillate" XP002152636 & KEM. IND., vol. 30, no. 5, 1981, pages 249-251, yugoslavia
- DATABASE WPI Section Ch, Week 198207 Derwent Publications Ltd., London, GB; Class D23, AN 1982-13166E XP002152637 & SU 825 609 A (ESSENTIAL OIL COMBI), 30 April 1981 (1981-04-30)
- MACHALE K W ET AL: "RECOVERY OF DISSOLVED ESSENTIAL OILS FROM CONDENSATE WATERS OF BASIL AND MENTHA ARVENSIS DISTILLATION" JOURNAL OF CHEMICAL TECHNOLOGY AND BIOTECHNOLOGY. (INTERNATIONAL JOURNAL OF BIOTECHNICAL AND CHEMICAL PROCESSES),GB,ELSEVIER APPLIED SCIENCE PUBLISHERS. BARKING, vol. 69, no. 3, 1 July 1997 (1997-07-01), pages 362-366, XP000702184 ISSN: 0268-2575
- DATABASE WPI Section Ch, Week 199437 Derwent Publications Ltd., London, GB; Class B04, AN 1994-299695 XP002152638 & JP 06 227994 A (JUMOKU CHUSHUTSU SEIBUN RIYO GIJUTSU KEN), 16 August 1994 (1994-08-16) cited in the application
- DATABASE WPI Section Ch, Week 198722 Derwent Publications Ltd., London, GB; Class B05, AN 1987-155783 XP002152639 & SU 1 263 249 A (BOTANY INST), 15 October 1986 (1986-10-15) cited in the application

## Description

The present invention is concerned with a process for separating essential oils from an essential oil-containing material.

Essential oils are widely used as ingredients for fragrances and for flavouring mixtures. The term "essential oils" denotes a group of native substances which are obtainable from plants, certain plant parts and spices.

The essential oils despite being named oils are of a non-fatty nature and they are usually composed of a multitude of different compounds. The bulk of these compounds are volatile, lipophilic substances. These substances are predominately hydrocarbons or monofunctional compounds derived from the metabolism of mono- and sesqui-terpenes, phenylpropanoic acids and fatty acids (Ullmann's Encyclopaedia of Industrial Chemistry, 4th edition, volume 11, page 212).

Essential oils are commonly obtained by physical processes such as steam distillation, solvent extraction, mechanical separation (pressing) or the like from plant material. The most common process for obtaining essential oils is steam distillation followed by decantation of the essential oil from the steam distillate.

The afore-mentioned processes, however, are not satisfactory in various respects. In the case of steam distillation in particular, a large volume of steam is required to extract the essential oils. This is disadvantageous in two respects. Firstly, the essential oils are usually contained only in minor quantities in the plant materials. Accordingly, the ratio of steam or water to essential oil in the steam distillate is large, giving rise to problems in the subsequent phase separation and also causing a significant amount of essential oil to remain dissolved in the aqueous phase.

For example, in the case of orris oil, which is one of the most expensive essential oils, the steam distillate contains approximately 20 to 60 ppm orris oil. The aqueous phase after decantation contains approximately 20 ppm orris oil. Thus, at some stage in the production of orris oil no further product can be generated. Alternatively, one could also say that a substantial part of the valuable orris oil contained in the starting material cannot be utilised. In absolute terms, this problem, of course, becomes worse with an increase in the steam volume.

In order to remedy this deficiency at least to some extent, known processes often cool the steam distillate in the decantation vessel. However, this measure does not entirely dispose with the above problems and moreover slows the production process down. A further known measure in such processes is the recycling of the aqueous phase from the decanter into the steam distillation vessel.

However, even when the aqueous phase is recycled from the decanter into the steam distillation vessel, the above problem with the residual essential oil content in said phase is not entirely overcome. On the contrary, when such a recycling technique is adopted, a substantial amount of essential oil is merely circulated through the system and never extracted as product.

A second major drawback associated with the use of a large steam volume is the substantial amount of energy required to generate the steam. One way of reducing the energy consumption is to use warm water, preferably from the decantation vessel. This, however, is not always possible as the requirements in the decantation step and those in the steam distillation step in this respect are quite the opposite: While in the decanter low temperatures are preferred in view of the phase separation and the residual amount of the essential oils in the aqueous phase, the steam distillation requires a high temperature recycling stream in order to consume less energy. As a result, the known processes need to compromise in either one or both steps.

From SU-A 126 32 49 there is known a process for the preparation of 5-hydroxy-2-methyl-1,4-naphthalene-dione (plumbagin), a preservative for the pharmaceutical industry. The process involves steam distillation of Ceratostigma plumbaginoides, subsequent work-up with activated carbon and crystallisation. The aim of this process is to improve the work-up by way of reducing the volumes that need to be processed.

From CN-A 107 69 26 there is furthermore known a process for the production of polyphenols from tea, wherein an aqueous extract is contacted with a macroporous resin in order to increase the polyphenol concentration.

JP-A-6-227994 discloses recovering hinokitiol from the steam distillate of Japanese cypress leaves using an adsorption column packed with e.g. activated carbon or silica gel. Hinokitiol is desorbed from the adsorption column in a subsequent step using acetone.

JP-A-60-115699 discloses a process for recovering hop essential oil contained in the vapour discharge from a wort boiling process in beer production. The vapour discharge is cooled to 30-70°C, washed with an aqueous solution, and then brought into contact with a solid adsorbent capable of adsorbing the hop essential oil. The adsorbent is then treated with a solvent such as hexane or ethanol to elute the hop essential oil allowing its recovery.

In view of the above, it is the object of the present invention to provide a more efficient process for the production of essential oils. In particular, the present invention aims at a lower energy consumption, while simultaneously increasing the yield of essential oil.

According to the present invention, there is provided a process for separating essential oils from an essential oil-containing material comprising the steps of:
(i) subjecting the essential oil-containing material to steam distillation using a steam distillation vessel or extraction using an extraction vessel to produce a mixture containing the essential oil and at least one hydrophilic phase;
(ii) contacting the mixture with a hydrophobic adsorbent in an adsorption vessel;
(iii) recycling the hydrophilic phase leaving the adsorption vessel to the steam distillation vessel or extraction vessel; and
(iv) desorbing the essential oils from the adsorbent.

This process allows for a quantitative or almost quantitative recovery of the essential oil from the steam distillate or similar mixtures, without the need to cool the mixtures to low temperatures. Thus, the process of the present invention makes use of a high temperature recycling stream which can contribute to a lower energy consumption in the case where the starting mixture is generated by steam distillation. The same advantages can also be obtained when the mixture is generated in an extraction process. The separation according to the present invention is also faster than the separation by way of decantation, whereby the overall performance of the production of essential oils is improved. The improvement in this respect is two-fold. Firstly, the process is no longer limited by the rate of the phase separation and secondly, the highly efficient separation reduces the time needed to recover a given amount of material and thereby tremendously increases the overall efficiency of the process. In addi tion, the overall volume of steam or extracting solvent may be decreased due to the step of recycling the hydrophilic phase leaving the adsorption vessel to the steam distillation vessel or extraction vessel.

In a preferred aspect, the adsorption vessel is a column and the desorption is effected as a chromatographic separation of the essential oil. The use of such a column avoids the need to transfer the mixture of essential oils to a separate reaction vessel.

Further advantages of the process provided by the present invention will become evident from the following description.

According to the first essential step of the present invention, a mixture is produced containing essential oils and at least one hydrophilic phase. This mixture is formed by subjecting material which contains the essential oil to steam distillation using a steam distillation vessel or extraction using an extraction vessel. The mixture may further comprise a hydrophobic phase. The mixture can be a liquid, gaseous or a supercritical fluid. Gaseous mixtures are beneficial in that they provide for a high mass transfer rate to the adsorbent and obviate cooling measures. They also allow for a higher temperature of the phase exiting the adsorber. Liquid mixtures on the other hand are beneficial in terms of handling, apparatus requirements and the energy consumption.

Such mixtures can be prepared by steam distillation, water or solvent extraction or extraction with water and one or more solvents or solvent mixtures.

Such mixtures may exist as single phase mixtures, i.e. solutions, two phase mixtures, i.e. microemulsions, dispersions and the like or in any other form, provided that they comprise an essential oil and at least one hydrophilic phase.

The terms "hydrophilic" and "hydrophobic" as used in the present application are not to be construed as denoting certain absolute properties. They rather indicate a relative property. That is to say the "hydrophilic phase" need not be "hydrophilic" in absolute terms, but it needs to be more "hydrophilic" than the "hydrophobic" adsorbent and the essential oil.

The hydrophilic phase may for example contain water, alcohol, ketones or the like as well as mixtures thereof.

The essential oils contained in said mixture may originate from various sources such as native materials, genetically modified cells, organisms or plants. Mixtures derived from synthetic sources may also be used. Particularly preferred are essential oils contained in one of the following plants or plant-based materials: Amber seed (= Ambrette or Musk seed), Rose, Cardamon, Cistus (= Rockrose), Costus root, Cumin, Elemi, Incence, Galbanum, Juniper, Gurjun, Lovage, Nutmeg, Orris, Myrrh, Cicely, Sweet Cicely, Styrax, Valerian, Melissa, Parsley, Bucchu, Cypress, Geranium, Lavandin, Lavender, Pachouli, Santal (= Sandalwood), Sage, Vetyver and Ylang Ylang.

Examples of essential oils that may be produced according to the method of the present invention are in particular: Amber oil, Ambrette, Rose oil, Cardamon oil, Cistus oil, Costus oil, Cumin oil, Elemi oil, Incence oil, Galbanum oil, Juniper oil, Gurjun oil, Lovage oil, Nutmeg oil, Orris oil, Myrrh oil, Cicely oil, Sweet Cicely oil, Styrax oil, Valerian oil, Melissa oil, Parsley oil, Bucchu oil, Cypress oil, Geranium oil, Lavandin oil, Lavender oil, Patchouli oil, Santal oil, Sage oil, Vetyver oil and Ylang Ylang oil.

The mixture used in the process according to the present invention may, in addition to the hydrophilic phase and the essential oils, also contain some other endogenous materials such as fatty acids, fatty acid esters, aromatic compounds, carbohydrates, organic acids, amines and the like. Preferably, however, the content of these substances should be as low as possible.

The mixture used in the process according to the present invention is not particularly limited in view of the ratio of the hydrophilic phase to the essential oil. The ratio usually is such that the mixture contains 80 to 99,999 % by wt. of the hydrophilic phase, commonly water, and 10 ppm to 20 % by wt. organic material. The process according to the invention may thus also be used to recover the residual amounts of essential oils from the aqueous phase exiting the known decanters.

For separating the essential oils from the hydrophilic phase, the mixture is contacted with a hydrophobic adsorbent material. Such materials are for example synthetic polymers, modified silica, activated carbon or the like. Preferred examples include polystyrene, divinyl benzene-crosslinked polystyrene, activated carbon, and C4-, C8- and C18-coated silica. Amongst these, C4-, C8-and C18-coated silica are particularly preferred.

The amount of adsorbent used in an individual case depends on the adsorbent used, the type and amount of essential oil to be adsorbed as well as the residence time in the adsorber vessel, i.e. the time during which the mixture and the adsorbent are in contact. Usually the adsorber materials have a capacity of 10 to 50% wt./wt. Accordingly, the adsorber material should be used in such an amount that its capacity corresponds to 2 to 20 times the amount of the essential oil to be collected per batch or regeneration cycle.

The particle size of these hydrophobic adsorbents or stationary phases is not particularly limited as long as they are capable of removing the essential oils from the above mixture. However, the person skilled in the art will appreciate that in view of the adsorber capacity and the flow in the adsorber vessel, materials with a very small particle size and materials with a very large particle size may not lead to optimum results. Preferred are average particle sizes of 3 to 400 µm, and particles which have a spherical or irregular shape. In a particularly preferred embodiment of the present invention, the particles have a spherical shape. In this case the preferred average particle size is 20 to 80 µm.

The vessel in which the separation according to the present invention may be effected is not particularly limited. In a preferred aspect, the adsorption vessel is a column and the step of desorption is effected as a chromatographic separation of the essential oil. Such a technique is particularly preferred as it avoids the need to first desorb the mixture of the essential oils and transfer these to a separate chromatographic column. In this case, of course, larger amounts of adsorbent than those exemplified above need to be used. The size of the vessel needs, of course, to be adapted to individual needs.

In the adsorber vessel, the pressure may range from 0 to 200 bar gauge, whereby the range of 5 to 80 bar gauge is preferred. The flow velocity is preferably in the range of 0,01 to 10 bed volumes per minute, whereby the range of 0,1 to 3 bed volumes per minute is particularly preferred. The adsorption may be performed at a temperature of 0 to 100°C depending on the type of the hydrophilic phase and the pressure in the vessel. Higher temperatures are, of course, more relevant for gaseous mixtures. Usually a temperature in the range from 20 to 70°C is preferred. In the case where the mixture is a steam distillate, it is preferred that the aqueous phase leaving the adsorber vessel has a temperature of 55 to 70°C, as this allows energy efficient recycling. The hydrophilic phase which leaves the adsorption vessel is recycled to the steam distillation vessel or extraction vessel which increases the efficiency of the process as a whole. This recycling of the hydrophilic phase allows, in a preferred embodiment, for the process of the invention to be carried out continuously.
After loading the adsorber material to the desired degree, the supply of the mixture to the adsorber vessel is interrupted. In the next step the desorption of the essential oils is effected. For this purpose the loaded adsorbent is treated with a solvent that is of a more hydrophobic nature than the hydrophilic phase. Suitable solvents for this purpose include ethers, such as diethylether, alcohols, such as methanol and ethanol, ketones, such as dimethylketone, and the like. The solvents for use in the present invention are not particularly limited and can be chosen according to particular needs. However, generally speaking solvents with a low boiling point are preferred as they can easily be removed without subjecting the essential oils to high temperatures.

A particular type of desorption also included in the present invention is chromatography. In the case where the adsorption vessel is a column, the adsorbent can be used as a stationary phase for chromatographic separation of the components of the essential oils. In this case, not only the amount of adsorbent needs to be increased, it is also preferable to use a higher column reactor. In addition, the solvent for the desorption or better the chromatographic separation needs to be selected according to the type of adsorbent and the essential oil. Suitable solvents or solvent mixtures for this purpose can easily be determined by those skilled in the art.

The use of the adsorbent for chromatographic separation can be of particular value if only some components contained in the essential oils are of interest. For example in the case of orris oil, the essential oil is composed of two major components, namely myristic acid and irone. While the irone is of particular commercial value, there is also a demand for myristic acid e.g. for formulating various blends. According to known processes the orris oil thus needs to be transferred into a further piece of equipment wherein the irone is separated by way of molecular distillation. Such separations are also common with other essential oils such as Ambrette oil.

In the case, however, where orris oil containing mixtures are treated according to the present invention, it is possible to not only extract the orris oil quantitatively from e.g. a steam distillate but also to separate the irone, without the need to isolate and transfer the orris oil to a further piece of equipment. This facilitates and simplifies the process substantially.

The resulting solution of the essential oils in the solvent or the various fractions containing components of the essential oils in a solvent or a solvent mixture can then be worked up according to usual methods such as evaporation at elevated temperatures and/or under reduced pressure in order to yield the desired products. In a preferred embodiment, the solvent is recovered and used several times.

### Example 1

20 kg of dry powdered orris root were mixed with 250 litres of water. After 24 hours of extraction at 25°C the suspension was transferred into a 1000 l steam distillation unit. Then steam distillation was carried out for 12 h at 48 litres/hour.

The condensate was passed through a solid phase extraction unit (column) packed with 200 g (dry weight) of 40 µm spherical C18-coated silica. The condensate was recycled back into the steam distillation vessel after the adsorption step. The rate of condensate flow through the column was the same as the distillation rate, 48 litres/hour. Afterwards, the column was washed with 2 litres of ethanol. The eluate was collected and ethanol was evaporated.

82 g of orris butter were collected. Based on the orris root starting material this corresponds to a yield of 0,41%.

### Comparative Example 1

75 kg of dry powdered orris root were mixed with 1000 litres of water. The suspension was then transferred into a 3000 1 steam distillation unit. Subsequently, steam distillation was carried out for 10 h at 300 litres/hour.

The distillate was subjected to decantation before being recycled into the steam distillation unit.

In this way 250 g of orris oil were collected. Based on the orris root starting material this corresponds to a yield of 0,33%.

The above Example 1 shows that the process according to the invention allows for nearly quantitative or quantitative recovery of essential oils from mixtures containing the same and a hydrophilic phase. Moreover, a comparison between Example 1 and Comparative Example 1 shows that the yield in essential oil can be increased by approximately 25%. At the same time, less steam is needed.

### Example 2

1,0 g of orris butter were dissolved in 5 litres of water. The butter contained approximately 25 wt.-% natural irone and approximately 75 wt.-% myristic acid.

The mixture was passed through a solid phase extraction unit, i.e. an adsorber, at a flow velocity of 10 ml/min. The unit was a column packed with 10g (dry weight) of 40 µm spheres of C18-coated silica. All irone and myristic acid were retained by the adsorbent. This procedure was carried out to simulate the recovery of orris butter from the steam distillate of orris root according to Example 1.

Subsequently, chromatography was performed by eluting a first fraction with 100 ml of a 1:1 (w/w) water/ethanol mixture. Then chromatography was continued by eluting a second fraction with 100 ml of ethanol.

Removal of the water/ethanol mixture from the first fraction yielded 0,2 g natural irone with 98% purity (GC). Removal of the ethanol from the second fraction yielded 0,8g myristic acid with 94% purity (GC).

This shows that according to the present invention it is also possible to purify natural irone in a simple manner and with excellent results. This purification obviates not only the transferral of the orris oil into a particular separation apparatus, but it also obviates the molecular distillation that is required for the recovery of irone according to known processes.

### Example 3

20 kg of dry powdered orris root were admixed with 250 litres of water. The resulting suspension was then transferred into a 1000 1 steam distillation unit. Subsequently steam distillation was carried out for 10 h at 42 l/h.

The condensate was passed through a solid phase extraction unit, which was a column (inner diameter 5 cm, height 30 cm) packed with 200g (dry weight) of 40 µm spherical C18-coated silica at 55°C. After the adsorption step, the condensate was recycled back into the steam distillation vessel.

The irone content was measured from samples taken before and after the solid phase extraction unit (SPE). The results are shown in Table 1 below:

**Table 1**

| **Time** **[h]** | **Irone content in condensate** **[ppm]** | **Irone content after SPE** **[ppm]** | **Collection efficiency** **[%]** |
|---|---|---|---|
| 0,5 | 43 | 0 | 100 |
| 1,5 | 73 | 0 | 100 |
| 2,5 | 12 | 0 | 100 |
| 3,5 | 14 | 0 | 100 |
| 4,5 | 7 | 0 | 100 |
| 5,5 | 4 | 0 | 100 |
| 6,0 | 2 | 0 | 100 |
| 7,0 | 2 | 0 | 100 |
| 8,0 | 1 | 0 | 100 |
| 9,0 | 0 | 0 | 100 |
| 10,0 | 0 | 0 | 100 |

### Comparative Example 2

75 kg of dry powdered orris root were admixed with 1000 litres of water. The resulting suspension was then transferred into a 3000 1 steam distillation unit. Subsequently steam distillation was carried out for 10 h at 300 l/h. The ratio of the amount of distilled water to irone was double when compared to Example 3.

The condensate was passed through two decanters that were used to collect the irone at 45°C. The condensate was recycled back into the steam distillation vessel after decantation at the rate of 300 l/h.

The irone content was measured from samples taken before the first and after the second decanter. The results are shown in Table 2 below:

**Table 2**

| **Time** **[h]** | **Irone before first decanter** **[ppm]** | **Irone after second decanter** **[ppm]** | **Collection efficiency** **[%]** |
|---|---|---|---|
| 1 | 61 | 13 | 79 |
| 2 | 62 | 35 | 56 |
| 3 | 22 | 21 | 5 |
| 4 | 30 | 15 | 50 |
| 5 | 20 | 14 | 30 |
| 6 | 14 | 14 | 0 |
| 7 | 14 | 10 | 29 |
| 8 | 13 | 10 | 23 |
| 9 | 10 | 15 | -33 |
| 10 | 11 | 11 | 0 |

Comparative Example 2 shows that according to the known processes substantial amounts of irone are recycled when decantation is used for separation. In the case of the process according to the present invention, however, the irone is quantitatively removed from the mixture (cf. Example 2).

A comparison of Example 3 and Comparative Example 2 moreover reveals that the process according to the present invention can be operated with a much smaller water flow and still produces better results. This results in a shorter and still more efficient process.

Shorter processing times further mean imposing less thermal strain on the raw material. Prolonged steam distillation of the raw materials such as orris root frequently gives rise to off notes. These off notes are rather difficult to remove and strongly limit the quality and utility of the respective essential oils. The process according to the present invention requires less distillation time and thus also imposes less thermal strain. This in turn leads to an improvement of the product quality.

## Claims

1. A process for separating essential oils from an essential oil-containing material comprising the steps of:
(i) subjecting the essential oil-containing material to steam distillation using a steam distillation vessel or extraction using an extraction vessel to produce a mixture containing the essential oil and at least one hydrophilic phase;
(ii) contacting the mixture with a hydrophobic adsorbent in an adsorption vessel;
(iii) recycling the hydrophilic phase leaving the adsorption vessel to the steam distillation vessel or extraction vessel; and
(iv) desorbing the essential oils from the adsorbent.

2. A process according to Claim 1, wherein the mixture is obtained by steam distillation of the essential oil-containing material.

3. A process according to Claim 2, wherein the hydrophilic phase which is recycled in step (iii) has a temperature of 55-70°C.

4. A process according to any preceding Claim, wherein the hydrophobic adsorbent is selected from synthetic polymers, modified silica and activated carbon.

5. A process according to Claim 4, wherein the adsorbent is selected from polystyrene, divinyl benzene-crosslinked polystyrene, and C4-, C8- and C18-coated silica.

6. A process according to any preceding Claim, wherein the essential oil-containing material is selected from Amber seed (=Ambrette or Musk seed), Rose, Cardamom, Cistus (=Rockrose), Costus root, Cumin, Elemi, Incence, Galbanum, Juniper, Gurjun, Lovage, Nutmeg, Orris, Myrrh, Cicely, Sweet Cicely, Styrax, Valerian, Melissa, Parsley, Bucchu, Cypress, Geranium, Lavandin, Lavender, Patchouli, Santal (=Sandalwood), Sage, Vetyver and Ylang Ylang.

7. A process according to any preceding Claim, wherein the essential oil is selected from Amber oil, Ambrette, Rose oil, Cardamom oil, Cistus oil, Costus oil, Cumin oil, Elemi oil, Incence oil, Galbanum oil, Juniper oil, Gurjun oil, Lovage oil, Nutmeg oil, Orris oil, Myrrh oil, Cicely oil, Sweet Cicely oil, Styrax oil, Valerian oil, Melissa oil, Parsley oil, Bucchu oil, Cypress oil, Geranium oil, Lavandin oil, Lavender oil, Patchouli oil, Santal oil, Sage oil, Vetyver oil and Ylang Ylang oil.

8. A process according to any preceding Claim, wherein the adsorption vessel is a column and wherein the desorption is effected as a chromatographic separation of the essential oil.

9. A process according to Claim 8, wherein the essential oil is Orris oil which is separated by the column into myristic acid and irone.

10. A process according to any preceding Claim, which is carried out continuously.

## Patentansprüche

1. Verfahren zum Abtrennen ätherischer Öle von einem ätherische Öle enthaltenen Material, umfassend die Schritte:
(i) Unterziehen des ätherische Öle enthaltenen Materials einer Dampfdestillation unter Verwendung eines Dampf-Destillationskessels oder einer Extraktion unter Verwendung eines Extraktionskessels, um eine Mischung, die ätherische Öle und zumindest eine hydrophile Phase enthält, zu erzeugen;
(ii) Kontaktieren der Mischung mit einem hydrophoben Adsorptionsmittel in einem Adsorptionskessel;
(iii) Rückführen der hydrophilen Phase, die den Adsorptionskessel zu dem Dampf-Destillationskessel oder Extraktionskessel hin verlässt; und
(iv) Desorbieren der ätherischen Öle von dem Adsorptionsmittel.

2. Verfahren gemäß Anspruch 1, wobei die Mischung durch Dampfdestillation des das ätherische Öl enthaltenen Materials erhalten wird.

3. Verfahren gemäß Anspruch 2, wobei die hydrophile Phase, die in dem Schritt (iii) zurückgeführt wird, eine Temperatur von 55-70°C aufweist.

4. Verfahren gemäß einem der voranstehenden Ansprüche, wobei das hydrophobe Adsorptionsmittel aus synthetischen Polymeren, modifizierten Silizium-Dioxiden und Aktivkohle ausgewählt wird.

5. Verfahren gemäß Anspruch 4, wobei das Adsorptionsmittel aus Polystyrolen, Divinylbenzol- vernetzten Polystyrolen sowie C4-, C8- und C18- beschichteten Siliziumdioxiden ausgewählt ist.

6. Verfahren gemäß einem der voranstehenden Ansprüche, wobei das ätherische Öl enthaltene Material aus Amber-Saat (=Ambrette oder Moschus-Saat), Rose, Kardamon, Zistus (=Zistrose), Costuswurzel, Kreuzkümmel, Ölbaumharz, Weihrauch, Gummiharz, Wacholder, Gurjunbaum, Liebstöckel, Muskat, Iris Florentina, Myrrhe, Doldenblütengewächse (Cicely), Süßdolde, Storax, Baldrian, Melisse, Petersilie, Bucchu, Zypresse, Geranie, Lavandin, Lavendel, Patschulikraut, Sandel (=Sandelholz), Salbei, Vetivergras und Canangabaum ausgewählt ist.

7. Verfahren gemäß einem der voranstehenden Ansprüche, wobei das ätherische Öl aus Amberöl, Ambrette, Rosenöl, Kardamonöl, Zistusöl, Costusöl, Kreuzkümmelöl, Ölbaumharz-Öl, Weihrauchöl, Gummiharzöl, Wacholderöl, Gurjunbaumöl, Liebstöckelöl, Muskatöl, Iris Florentina-Öl, Myrrheöl, Cicelyöl, Süßdolden-Öl, Storaxöl, Baldrianöl, Melissenöl, Petersilieöl, Bucchuöl, Zypressenöl, Geranienöl, Lavandinöl, Lavendelöl, Patschuliöl, Sandelöl, Salbeiöl, Vetivergrasöl und Canangabaumöl ausgewählt ist.

8. Verfahren gemäß einem der voranstehenden Ansprüche, wobei der Adsorptionskessel eine Säule ist und wobei die Desorption als chromatographische Separation des ätherischen Öls erfolgt.

9. Verfahren gemäß Anspruch 8, wobei das ätherische Öl ein Iris Florentina-Öl ist, welches durch die Säule in eine Myristinsäure und Irone getrennt wird.

10. Verfahren gemäß einem der voranstehenden Ansprüche, welches kontinuierlich ausgeführt wird.

## Revendications

1. Procédé pour séparer des huiles essentielles d'une substance contenant des huiles essentielles comprenant les étapes consistant à :
(i) soumettre la substance contenant des huiles essentielles à une distillation à la vapeur en utilisant une cuve de distillation à la vapeur ou à une extraction en utilisant une cuve d'extraction pour produire un mélange contenant l'huile essentielle et au moins une phase hydrophile ;
(ii) mettre en contact le mélange avec un adsorbant hydrophobe dans une cuve d'adsorption ;
(iii) recycler la phase hydrophile sortant de la cuve d'adsorption dans la cuve de distillation à la vapeur ou dans la cuve d'extraction ; et
(iv) désorber les huiles essentielles de l'absorbant.

2. Procédé selon la revendication 1, dans lequel le mélange est obtenu par distillation à la vapeur de la substance contenant des huiles essentielles.

3. Procédé selon la revendication 2, dans lequel la phase hydrophile qui est recyclée à l'étape (iii) présente une température de 55 à 70 °C.

4. Procédé selon l'une quelconque des revendications précédentes, dans lequel l'absorbant hydrophobe est choisi parmi les polymères synthétiques, la silice modifiée et le charbon actif.

5. Procédé selon la revendication 4, dans lequel l'adsorbant est choisi parmi le polystyrène, le polystyrène réticulé par du divinylbenzène et la silice revêtue en C4, C8 et C18.

6. Procédé selon l'une quelconque des revendications précédentes, dans lequel la substance contenant des huiles essentielles est choisie parmi les semences d'ambrette (= ambrette), rose, cardamone, ciste (= ciste de crète), racine de costus, cumin, élémi, encens, galbanum, genévrier, gurjun, livèche, noix de muscade, iris, myrrhe, cerfeuil, cerfeuil musqué, storax, centranthe, mélissa, persil, bucchu, cyprès, géranium, lavandin commun, lavande, patchouli, santal (= santal blanc), sauge, vétyver et ylang ylang.

7. Procédé selon l'une quelconque des revendications précédentes, dans lequel l'huile essentielle est choisie parmi l'huile d'ambrette, l'ambrette, l'huile de rose, l'huile de cardamone, l'huile de ciste, l'huile de costus, l'huile de cumin, l'huile d'élémi, l'huile d'encens, l'huile de galbanum, l'huile de genévrier, l'huile de gurjun, l'huile de livèche, l'huile de noix de muscade, l'huile d'iris, l'huile de myrrhe, l'huile de cerfeuil, l'huile de cerfeuil musqué, l'huile de storax, l'huile de centranthe, l'huile de mélissa, l'huile de persil, l'huile de bucchu, l'huile de cyprès, l'huile de géranium, l'huile de lavandin commun, l'huile de lavande, l'huile de patchouli, l'huile de santal, l'huile de sauge, l'huile de vétyver et l'huile de ylang ylang.

8. Procédé selon l'une quelconque des revendications précédentes, dans lequel la cuve d'adsorption est une colonne et dans lequel la désorption est effectuée comme une séparation chromatographique de l'huile essentielle.

9. Procédé selon la revendication 8, dans lequel huile essentielle est l'huile d'iris qui est séparée par la colonne en acide myristique et irone.

10. Procédé selon l'une quelconque des revendications précédentes, lequel est effectué de manière continue.
